# EUROPEAN PATENT APPLICATION

(11) **EP 1 829 957 A1**
(43) Date of publication of application: **05.09.2007**
(21) Application number: 05809551.4
(22) Date of filing: 28.11.2005
(51) Int. Cl.: C12C 7/04

(54) **METHOD OF PRODUCING FERMENTED DRINK BY USING RAW FERMENTATION LIQUOR WITH LOW MALTOTRIOSE CONTENT**

(30) Priority: 30.11.2004 JP 2004347440
(71) Applicant: SUNTORY LIMITED, Osaka-shi, Osaka 530-8203 (JP)
(72) Inventor: FUJITA, Atsushi, 8612106 (JP); Kondo, Hiroto, Kyoto-shi, Kyoto 6060095 (JP); FUKUI, Nobuyuki, 5691123 (JP); NISHIDA, Yuji, 1830025 (JP)
(74) Representative: Vossius & Partner
(86) International application number: PCT/JP2005/021805
(87) International publication number: WO 2006/059571

(57) **Abstract**

It is an object of the present invention to provide fermented beverages that give no sweetness in aftertaste and which have less off-flavors by a technique that will not affect the principal taste and aroma characteristics and which is highly acceptable to consumers.

To attain this object, the proportion of trisaccharides in the assimilable sugars in the fermentation raw material solution or fermenting solution is adjusted, such that the yet-to-be assimilated sugars which remain in the fermenting step will not consist mainly of trisaccharides. Specifically, fermentation is performed while the proportion of trisaccharides in assimilable sugars in the fermentation raw material solution is adjusted to be no more than 25 wt%.

## Description

### TECHNICAL FIELD

This invention relates to fermented beverages using malt and the like as raw materials, particularly to fermented beverages that are free from off-flavors such as hydrogen sulfide and which give less sweetness in aftertaste, as well as to a process for producing such fermented beverages.

### BACKGROUND ART

With fermented beverages such as regular beer and *happoshu* (low-malt beer) that are obtained by fermenting fermentation raw material solutions made from malt or other cereal raw materials, efforts are constantly being made to search for various new tastes and aromas; as a result, products that satisfy consumers' preferences have been created and brought to market. A common problem with the production of such fermented beverages is the suppression of off-flavors. Thus, studies are being made to develop techniques for suppressing the generation of off-flavors without affecting the principal taste and aroma characteristics.

Hydrogen sulfide is a typical off-flavor in fermented alcoholic beverages and gives off an odor resembling that of rotten eggs. Therefore, its content in the products should be as small as possible, desirably less than the organoleptic threshold.

Hydrogen sulfide is generated as an intermediate product when sulfate ions that a yeast takes up from a fermentation raw material are reduced by it for biosynthesis of sulfur-containing amino acids such as methionine and cysteine.

As means for suppressing its generation, it is effective to enhance the concentration of amino acids, in particular, sulfur-containing amino acids in wort, as shown in Patent Document 1; however, this technique involves changes in the basic taste and aroma of the fermented beverage obtained, thus putting limitations on the latitude in the design of taste and aroma.

An alternative technique comprises using a yeast that has its system of sulfur-containing amino acid biosynthesis modified by a genetic engineering approach, as shown in Patent Document 2; however, at the present time, this technique is not always accepted by consumers and hence is not a suitable method for producing commercial beverages.

Now, speaking of yeasts that are used in brewing alcoholic beverages, they mainly assimilate mono-, di, and trisaccharides among the sugars contained in the fermentation raw material solution, thereby producing alcohol, but as compared with mono- and disaccharides, trisaccharides are known to be assimilated at a very slow rate (Non-Patent Document 1).
Patent Document 1: Official Gazette of International Publication W02004/041992
Patent Document 2: JP H07-303457 A
Non-Patent Document 1: J. Am. Soc. Brew. Chem. 53(1):24-29, 1995 (Y. Kodama et al.)

### DISCLOSURE OF THE INVENTION

### PROBLEMS TO BE SOLVED BY THE INVENTION

In view of the circumstances described above, it is an object of the present invention to provide fermented beverages with less off-flavors, by a technique that will not affect the principal taste and aroma characteristics and which is highly acceptable to consumers.

### MEANS FOR SOLVING THE PROBLEMS

The present inventors analyzed concentration profiles of hydrogen sulfide under various fermentation conditions. As a result, they found the fact that the rate of sugar assimilation (the rate at which the sugar concentration decreased per unit time) affects the concentration of hydrogen sulfide, and that the concentration of hydrogen sulfide in the fermenting solution increases if the assimilation rate decreases.

On the basis of these findings and the observation in the aforementioned Non-Patent Document 1 that as compared with mono- and disaccharides, trisaccharides are assimilated at a very slow rate, the inventors got the idea of preparing a fermentation raw material solution with decreased contents of trisaccharides and subjecting it to fermentation. This enabled the concentration of hydrogen sulfide in a fermented beverage to be held at a significantly low level while suppressing the sweetness in aftertaste, thus leading to the accomplishment of the present invention.

Therefore, the present invention, in one aspect thereof, provides a process for producing fermented beverages. Specifically, the present invention relates to a process for producing fermented beverages of low hydrogen sulfide concentration, comprising performing fermentation at a controlled proportion of trisaccharides in assimilable sugars in the fermentation raw material solution or fermenting solution.

More specifically, the present invention relates to a process for producing fermented beverages comprising
1) a step of providing a fermentation raw material solution containing mono-, di-, and trisaccharides;
2) a step of mixing the fermentation raw material solution with a yeast and subjecting the mixture to fermentation; and
3) an optional refining step for removing a solid(s),
wherein the proportion of trisaccharides in assimilable sugars in the fermentation raw material solution or fermenting solution is controlled in step 1) and/or 2). Here, the proportion of trisaccharides is controlled by adjusting the proportion of trisaccharides in assimilable saccharides in the fermentation raw material solution or fermenting solution, such that the sugars yet to be assimilated which remain during the fermentation step (step 2) are not solely composed of trisaccharides, or such that, even if the remaining, yet-to-be assimilated sugars are solely composed of trisaccharides, the concentration of those trisaccharides which remain in the fermenting solution will be no more than 0.5 wt/vol%. For example, in the fermentation raw material solution at the start of fermentation (or step 1), the proportion of trisaccharides in the assimilable sugars may be controlled at a specified value. In addition, the percent content of trisaccharides may be controlled by supplying an additional amount of mono- or disaccharides during fermentation.

### ADVANTAGES OF THE INVENTION

According to the present invention, there are provided fermented beverages that give less sweetness in aftertaste and which have less odor of hydrogen sulfide. In particular, by the easy method of adjusting the sugar composition of the fermentation raw material solution (e.g. wort) and subjecting it to fermentation, almost all of the sugars present may be assimilated, and yet an elevation of the concentration of hydrogen sulfide in fermented beverages can be suppressed, thereby providing fermented beverages that have less odor of hydrogen sulfide, give clear aftertaste, and give less sweetness in aftertaste.

### BEST MODE FOR CARRYING OUT THE INVENTION

The fermented beverages to be provided by the present invention are alcohol-containing beverages produced by fermenting with yeast or the like the fermentation raw material solution prepared from malt and the like. Among others, beer-taste beverages are beverages that are produced by yeast fermentation of raw materials comprising carbohydrate raw materials such as malt or carbohydrate solution, hops, and the like, and which have a beer-like flavor. Specifically, they include regular beer, *happoshu* (low-malt beer), *zasshu* (other beers), liqueurs, spirits, low-alcohol malt fermented beverages (e.g. malt fermented beverages with less than 1% alcohol), etc.

As used herein, the fermentation raw material solution is a feed solution yet to be subjected to the fermentation step, and this contains mono-, di-, and trisaccharides that are to be assimilated by microorganisms. The step of preparing the fermentation raw material solution includes a step of dissolving those sugars, and/or a step of hydrolyzing polysaccharides such as starch (enzymatically or chemically). Alternatively, a carbohydrate solution comprising a mixture of sugars may be obtained for use as sugars. In the production of beer-taste beverages, wort that is typically obtained by saccharification using malt corresponds to the fermentation raw material solution. Hereinafter, the present invention will be descried mainly by referring to an example of using wort as the fermentation raw material solution, but the following description equally applies to fermentation raw material solutions that are free of malt or barley. In addition, the fermenting solution as used herein refers to the solution in the process of alcohol fermentation with the fermentation raw material solution being used as the raw material.

The sugars assimilated by yeast, which are contained in the fermentation raw material solution made from malt or starch, are mainly mono- and disaccharides but trisaccharides are also assimilated. The fermentation raw material solution also contains tetra- and higher saccharides in very small amounts, but they are little assimilated by yeast; so in the present invention, the total sum of mono-, di- and trisaccharides is referred to as assimilable sugars. Note that the concentration of remaining sugars is the total quantity of assimilable sugars (mono-, di-and trisaccharides) in the fermenting solution or a fermented beverage, and for the sake of convenience, it is designated by the sum weight/volume% of glucose, maltose, and maltotriose.

Among the assimilable sugars in the fermentation raw material solution, monosaccharides include glucose, fructose, etc. and disaccharides include maltose, sucrose, etc. Trisaccharides include maltotriose, isomaltotriose, etc. In cereal-derived carbon sources used in ordinary fermented beverages, for example, saccharified malt or saccharified starch, trisaccharides are mostly maltotriose.

In the present invention, it is important that fermentation be performed at a controlled proportion of trisaccharides in assimilable sugars in the fermentation raw material solution or fermenting solution. Specifically, the proportion of trisaccharides is controlled such that mono- or disaccharides which can be assimilated at fast rate in the fermentation step will remain up until a point which is the nearest possible to the end point.

Fermented beverages with the concentration of remaining sugars being no more than 0.5 wt/vol% give little sweetness in aftertaste when they are drunk. Therefore, in the present invention, it is important that at the time when the assimilation of fast assimilable sugars (monosaccharides and disaccharides) has ended, trisaccharides are either absent or if any is present, their concentration will not exceed 0.5 wt/vol%.

A specific method for controlling the proportion is by no means limited but, to give an example, in the fermentation raw material solution at the start point of fermentation, the ratio between fast assimilable sugars (monosaccharides and disaccharides) and slowly assimilable sugars (trisaccharides) may be adjusted. A preferred sugar composition in the fermentation raw material solution is such that the proportion of trisaccharides in the assimilable sugars is no more than 25 wt%, preferably no more than 20 wt%. In that case, the sum concentration of assimilable sugars in the fermentation raw material solution is preferably adjusted such that it is from 8 to 15 wt/vol%. A specific method of thusly adjusting the sugar composition of the fermentation raw material solution is not limited in any particular way. For example, the sugar composition can be adjusted by controlling the amount and composition of the carbohydrate solution to be added to the fermentation raw material solution such as wort, the conditions for the step of saccharifying starch or the like (e.g. temperature, pH, reaction time, and the type and amount of the enzyme preparation), and the conditions for preparing the fermentation raw material solution (e.g. temperature, pH, reaction time, and the type and amount of the enzyme preparation).

As used herein, the "carbohydrate solution" refers to a solution that contains raw materials that can be assimilated by yeast as carbon sources without passing through the saccharifying step, in the production of fermented beverages. For example, to obtain it, chiefly cereal raw materials such as starch are hydrolyzed either with an enzyme or with an acid or alkali. Alternatively, it may be commercially available glucose syrup or liquid sugar, or it may be obtained by dissolving in water the sugars that are obtained by synthesis or the like.

Carbohydrate solutions with a low proportion of trisaccharides in the assimilable sugars can be prepared by choosing the enzyme and reaction conditions for decomposing starch. The proportion of sugars can also be adjusted by using refined mono-, di, and/or trisacharides. A carbohydrate solution suitable for use in the present invention can be prepared by, for example, dissolving in water a commercial carbohydrate solution, HAIMARUTOP (Kato Chemical Co., Ltd.; 20 wt% trisaccharides in the assimilable sugars) or MARUTOKA (Kato Chemical Co., Ltd.; 23 wt% trisaccharides in the assimilable sugars).

The proportion of trisaccharides in the assimilable sugars can also be controlled by supplying additional amounts of mono- and disaccharides to the fermentation raw material solution before fermentation or to the fermenting solution, at a certain stage, say, in the latter period, of fermentation.

The present invention is particularly useful in the production of fermented beverages that use sugars as a raw material in addition to malt. In the production of such fermented beverages, the proportion of trisaccharides in the assimilable sugars can be adjusted fairly freely; however, in the case where they are contained in proportions of about 25-30 wt%, trisaccharides remain, depending on the strain of yeast and fermentation conditions, even at the point in time when mono- or disaccharides have been almost depleted. If the fermenting step ends here, the result is a fermented beverage that gives the sweetness in aftertaste. Hence, the usual practice is to further proceed with the assimilation of trisaccharides, but then the concentration of hydrogen sulfide rises sharply in the subsequent stage of fermentation. This fact was discovered by the present invention for the first time. Therefore, in the present invention, the proportion of trisaccharides in assimilable sugars in the fermentation raw material solution or fermenting solution is adjusted to ensure that the progress of fermentation in the fermenting step will not cause the yet-to-be assimilated sugars to consist mainly of trisaccharides.

In fermentation raw material solutions that are produced from 100% malt without using an enzyme preparation, the proportion of trisaccharides in assimilable sugars is usually about more or less 20 wt%; however, if the proportion of trisaccharides exceeds 25 wt% of the assimilable sugars, the proportion of trisaccharides in the fermentation raw material solution is preferably lowered by, for example, mixing it with another fermentation raw material solution that has been prepared from different raw materials or by a different process.

In the present invention, a fermented beverage is produced by performing fermentation with the proportion of trisaccharides being controlled as described above. The fermentation is conducted by mixing the fermentation raw material solution with yeast using a known method. The yeast to be used can be appropriately chosen from yeasts that are commonly used in the fermented beverage to be produced (e.g. Weihenstephan-34). The conditions for fermentation vary depending upon the type of the fermented beverage and the scale of its production; in the case of beer beverages, fermentation is performed using brewer's yeast at 5-20°C for 3-15 days. The green beer obtained may optionally be subjected to further aging for a specified period.

After alcohol fermentation, a refining step may optionally be followed to remove a solid(s). The refining step may be performed using a known technique such as filtration or centrifugation.

### EXAMPLES

On the following pages, examples are provided to explain the present invention in greater details, but the present invention is by no means limited to those examples.

### Test methods

The sugar concentration (wt/vol%) was measured by a known liquid chromatographic procedure (Analytica-EBC 1998.8.7).
The concentration of hydrogen sulfide was measured by a known gas chromatographic procedure (Analytica-EBC 1998.9.39).

In the following Examples, the proportion of trisaccharides in the assimilable sugars is expressed by wt%.

### (Method of organoleptic evaluation)

(1) Odor of hydrogen sulfide: Five trained panelists evaluated the presence or absence of hydrogen sulfide's odor by the following four-point scoring. No odor was perceived: score zero; slight odor was perceived: score one; odor was perceived: score two; strong odor was perceived: score three. When the average score was less than one, the odor of hydrogen sulfide was found absent (O); when the average score was one or more, the odor of hydrogen sulfide was found present (X). During the organoleptic testing, the samples were held at about 5°C.

(2) Sweetness in aftertaste: Five trained panelists evaluated the presence or absence of sweetness in aftertaste by the following four-point scoring. No sweetness in aftertaste was perceived: score zero; sweetness in aftertaste was slightly perceived: score one; sweetness in aftertaste was perceived: score two; sweetness in aftertaste was strongly perceived: score three. When the average score was less than one, the sweetness in aftertaste was found absent (O); when the average score was one or more, the sweetness in aftertaste was found present (X). During the organoleptic testing, the samples were held at about 5°C.

### EXAMPLE 1

Using raw materials consisting of 25% malt and 75% carbohydrate solution [which was prepared from a commercial base carbohydrate solution, MARUTOKA (Kato Chemical Co., Ltd.), by adjusting its sugar composition with glucose, maltose, and maltotriose], wort was prepared in brewing equipment of a pilot plant scale following a standard procedure. To the wort, commercial brewer's yeast
(Weihenstephan-34: purchased from Fachhochschle Weihenstephan) was added, and fermentation was performed by a standard procedure to prepare a fermented beverage (control 1).

Wort was also prepared using a carbohydrate solution with the percent content of trisaccharides being reduced to about one half that used in control 1, and a fermented beverage was prepared in the same way (invention sample 1).

The carbohydrate solution with the reduced content of trisaccharides was obtained from a commercial base carbohydrate solution, HAIMARUTOP (Kato Chemical Co., Ltd.), by adjusting its sugar composition with glucose, maltose, and maltotriose. The total quantity of the assimilable sugars in the fermentation raw material solution was 12% for both the control and the invention sample.

For each of the fermented beverages, the concentration of hydrogen sulfide was measured and organoleptic evaluation was performed when the concentration of remaining sugars (= the concentration of remaining assimilable sugars) was about 1% and about 0.5% (Table 1) during fermentation.

For control 1, when the concentration of remaining sugars was 1%, the concentration of hydrogen sulfide was about 2 ppb, and no odor of hydrogen sulfide was recognized in the organoleptic evaluation; however, when fermentation further progressed to such an extent that remaining sugars were not perceived (the concentration of remaining sugars being 0.5%), the concentration of hydrogen sulfide rose to about 10 ppb, and an odor of hydrogen sulfide was recognized.

By contrast, in the case of invention sample 1, irrespective of whether the concentration of remaining sugars was 1% or 0.5%, the concentration of hydrogen sulfide was zero ppb and no odor of hydrogen sulfide was recognized.

Thus, it was found that, by reducing the percent content of trisaccharides among the assimilable sugars in the wort, fermentation can proceed to such an extent that remaining sugars are not perceived (the concentration of remaining sugars being 0.5%) with the concentration of hydrogen sulfide being held low.

**[Table 1]**

| | | Control 1 | Invention Sample 1 |
|---|---|---|---|
| Concentration of remaining sugars 1.0% | Concentration of hydrogen sulfide (ppb) | 2 | 0 |
| | Odor of hydrogen sulfide | O | O |
| | Sweetness in aftertaste | X | X |
| Concentration of remaining sugars 0.5% | Concentration of hydrogen sulfide (ppb) | 10 | 0 |
| | Odor of hydrogen sulfide | X | O |
| | Sweetness in aftertaste | O | O |

### EXAMPLE 2

Using raw materials consisting of 25% malt and 75% carbohydrate solution [which was prepared from a commercial base carbohydrate solution, MARUTOKA (Kato Chemical Co., Ltd.), by adjusting its sugar composition with glucose, maltose, and maltotriose], wort was prepared in brewing equipment of a pilot plant scale following a standard procedure. To the wort, commercial brewer's yeast (AJL-3056: obtained from Danbrew Ltd A/S) was added, and fermentation was performed at a scale of 70 L by a standard procedure to prepare a fermented beverage (control 2).

Wort was also prepared using a carbohydrate solution with the percent content of trisaccharides being reduced to about one half that used in control 2, and a fermented beverage was prepared in the same way (invention sample 2).

The carbohydrate solution with the reduced content of trisaccharides was obtained from a commercial base carbohydrate solution, (Kato Chemical Co., Ltd.), by adjusting its sugar composition with glucose, maltose, and maltotriose. The total quantity of the assimilable sugars in the fermentation raw material solution was 12% for both the control and the invention sample.

For each of the fermented beverages, the concentration of hydrogen sulfide in the fermentation broth was measured and organoleptic evaluation was performed when the concentration of remaining sugars (= the concentration of remaining assimilable sugars) was about 1% and about 0.5% (Table 2).

For control 2, when the concentration of remaining sugars was 1%, the concentration of hydrogen sulfide was about 5 ppb, and the odor of hydrogen sulfide was hardly recognized in the organoleptic evaluation; however, when fermentation further progressed to such an extent that the sweetness in aftertaste was not perceived (the concentration of remaining sugars being 0.5%), the concentration of hydrogen sulfide rose to about 18 ppb, and an odor of hydrogen sulfide was recognized.

By contrast, in the case of invention sample 2, irrespective of whether the concentration of remaining sugars was 1% or 0.5%, the concentration of hydrogen sulfide was zero ppb and no odor of hydrogen sulfide was recognized.

From the results of Examples 1 and 2, it was found that, by reducing the percent content of trisaccharides among the assimilable sugars in the wort, fermentation can proceed to such an extent that the sweetness in aftertaste is not perceived (the concentration of remaining sugars being 0.5%), with the concentration of hydrogen sulfide being held low, irrespective of which yeast strain was used.

**[Table 2]**

| | | Control 2 | Invention Sample 2 |
|---|---|---|---|
| Concentration of remaining sugars 1.0% | Concentration of hydrogen sulfide (ppb) | 5 | 0 |
| | Odor of hydrogen sulfide | O | O |
| | Sweetness in aftertaste | X | X |
| Concentration of remaining sugars 0.5% | Concentration of hydrogen sulfide (ppb) | 18 | 0 |
| | Odor of hydrogen sulfide | X | O |
| | Sweetness in aftertaste | O | O |

### EXAMPLE 3

Using raw materials consisting of 25% malt and 75% carbohydrate solution, wort samples were prepared following a standard procedure. The total quantity of the assimilable sugars in the fermentation raw material solution was 12% in each case. The carbohydrate solutions to be used were obtained from commercial carbohydrate solutions, used either singly or in admixture, or by dissolving powders of maltose and maltotriose in water and adding the resulting solution to a commercial carbohydrate solution. Using these carbohydrate solutions and the malt, there were prepared wort samples that comprised assimilable sugars mainly composed of glucose (monosaccharide), maltose (disaccharide) and maltotriose (trisaccharide), the total sum of which was occupied by different proportions (30, 25, 20, 15, and 10 wt%) of the trisaccharide in the fermentation raw material solution.

To those wort samples, commercial brewer's yeast (Weihenstephan-34) was added and fermentation was performed by a standard procedure at a scale of 2 L; when the concentration of remaining sugars reached about 1% or 0.5%, the concentration of hydrogen sulfide in the fermentation broth was measured and organoleptic evaluation was carried out.

As a result, it was found that, when the proportion of the trisaccharide in the fermentation raw material solution was adjusted to 30%, the odor of hydrogen sulfide was perceived even when the concentration of remaining sugars was 1%, but that when the proportion of the same was adjusted to 25% or less, preferably 20% or less, fermentation could proceed until the remaining sugars dropped to 0.5%, and yet no odor of hydrogen sulfide was perceived, yielding an organoleptically favorable product.

It was thus found that, by reducing the proportion of the trisaccharide in the fermentation raw material solution to 20% or less, there can be produced fermented beverages that are free from the odor of hydrogen sulfide and which has low concentrations of remaining sugars.

**[Table 3]**

| | | Maltotriose Proportion | | | | |
|---|---|---|---|---|---|---|
| | | 30% | 25% | 20% | 15% | 10% |
| With 1% sugars remaining | Hydrogen sulfide | 8 | 3 | 0 | 0 | 0 |
| | Organoleptic evaluation | X | O | O | O | O |
| With 0.5% sugars remaining | Hydrogen sulfide | 18 | 10 | 4 | 0 | 0 |
| | Organoleptic evaluation | X | X | O | O | O |

### EXAMPLE 4

Using 67% malt and 33% carbohydrate solution, there was prepared wort in which the proportion of trisaccharides in the assimilable sugars was about 20%. As the carbohydrate solution, a commercial product (HAIMARUTOP of Kato Chemical Co., Ltd.) was used. To the thus prepared wort, commercial brewer's yeast (Weihenstephan-34) was added and fermentation was performed at a scale of 70 L by a standard procedure to prepare a fermented beverage (invention sample 3). When the concentration of remaining sugars dropped to about 0.5%, an organoleptic evaluation of the fermentation broth was carried out, with no odor of hydrogen sulfide being detected.

In the next place, using barley in addition to the malt and carbohydrate solution, there was prepared wort in which the proportion of trisaccharides in the assimilable sugars was about 15%. The use ratio (%) of malt:barley:carbohydrate solution was 25:15:60. Note that since barley was used as a cereal raw material, an appropriate amount of enzyme preparation was also used. As the carbohydrate solution, a commercial product, MARUTOKA (Kato Chemical Co., Ltd.), was used after the addition of a powdered sugar (maltose). To the thus prepared wort, a commercial brewer's yeast was added, and fermentation was performed at a scale of 70 L following a standard procedure to prepare a fermented beverage (invention sample 4). When the concentration of remaining sugars dropped to about 0.5%, an organoleptic evaluation of the fermentation broth was carried out, with no odor of hydrogen sulfide being detected.

Furthermore, a fermentation raw material solution was prepared without using malt but from a variety of cereals or protein digests and a carbohydrate solution. The fermentation raw material solution was such that the proportion of trisaccharides in the assimilable sugars was about 15%. During the preparation of the fermentation raw material solution, a proteolytic enzyme was optionally used. As the carbohydrate solution, a commercial product, MARUTOKA (Kato Chemical Co., Ltd.), was used after the addition of a powdered sugar (maltose). To the thus prepared fermentation raw material solution, a commercial brewer's yeast was added, and fermentation was performed following a standard procedure to prepare a fermented beverage (invention sample 5). When the concentration of remaining sugars dropped to about 0.5%, an organoleptic evaluation was carried out, with no odor of hydrogen sulfide being detected.

Thus, it was found that, if it is possible to prepare fermentation raw material solutions in which the proportion of trisaccharides in the assimilable sugars is 15-20%, beverages free from the odor of hydrogen sulfide that has low concentrations of remaining sugars can be obtained, irrespective of the raw material used.

## Claims

1. A process for producing a fermented beverage, comprising performing fermentation at a controlled proportion of trisaccharides in assimilable sugars in a fermentation raw material solution or fermenting solution.

2. The process according to claim 1, wherein the proportion of trisaccharides in assimilable sugars in the fermentation raw material solution or fermenting solution is adjusted such that the sugars yet to be assimilated which remain during the fermentation step are not solely composed of trisaccharides, or such that, even if the remaining, yet-to-be assimilated sugars are solely composed of trisaccharides, the concentration of those trisaccharides which remain in the fermenting solution will be no more than 0.5 wt/vol%.

3. The process according to claim 1, wherein in the fermentation raw material solution at the start of fermentation, the proportion of trisaccharides in the assimilable sugars is controlled to be no more than 25 wt%.

4. The process according to claim 3, wherein in the fermentation raw material solution at the start of fermentation, the proportion of trisaccharides in the assimilable sugars is controlled to be no more than 20 wt%.

5. The process according to any one of claims 1 to 4, which further comprises using a carbohydrate solution as an ingredient of the fermentation raw material solution.

6. The process according to claim 5, wherein a carbohydrate solution in which the proportion of trisaccharides in the assimilable sugars is no more than 20 wt% is used as an ingredient of the fermentation raw material solution.

7. The process according to claim 5, wherein a carbohydrate solution in which the proportion of trisaccharides in the assimilable sugars is no more than 15 wt% is used as an ingredient of the fermentation raw material solution.

8. The process according to any one of claims 1 to 7, wherein the trisaccharides to be controlled are maltotriose and/or isomaltotriose.

9. **The process according to any one of claims 1 to 8,** wherein the fermented beverage is a beer-taste fermented beverage.

10. The process according to claim 9, wherein the beer-taste fermented beverage is a member selected from the group consisting of regular beer, *happoshu* (low-malt beer), *zasshu* (other beers), liqueurs, spirits, and low-alcohol malt fermented beverages.

11. The process according to claim 10, wherein the fermented beverage has a low concentration of hydrogen sulfide and gives less sweetness in aftertaste.

12. The process according to any one of claims 1 to 11, wherein the concentration of hydrogen sulfide in the fermented beverage when it has been fermented until the concentration of remaining sugars drops to 0.5 wt%/vol% or less is no more than 5 ppb.

13. A fermented beverage as obtained by the process according to any one of claims 1 to 12, wherein the concentration of hydrogen sulfide is no more than 5 ppb, and the concentration of remaining sugars is no more than 0.5 wt%/vol%.

14. The fermented beverage according to claim 13, which is a beer-taste fermented beverage.
